# EUROPEAN PATENT SPECIFICATION

(11) **EP 1 984 679 B1**
(45) Date of publication and mention of the grant of the patent: **16.04.2014**
(21) Application number: 06733843.4
(22) Date of filing: 20.01.2006
(51) Int. Cl.: F24F 3/16, F24F 11/00

(54) **ELECTRONIC INDOOR AIR QUALITY BOARD FOR AIR CONDITIONER CONTROLLER**
ELEKTRONISCHE INNENRAUMLUFTQUALITÄTS-TAFEL FÜR KLIMAANLAGENSTEUERUNG
PANNEAU ÉLECTRONIQUE DE QUALITÉ D'AIR INTÉRIEUR POUR CONTRÔLEUR DE CLIMATISEUR

(43) Date of publication of application: 29.10.2008
(73) Proprietor: Carrier Corporation, Farmington, CT 06034 (US)
(72) Inventor: RUBINO, Ruello, 01600 St Didier de Formans (FR); SPINACI, Andrea, 20141 Milano (IT); JOSSERAND, Olivier, 01120 La Boisse (FR); ROYET, Eric, 01120 Thil (FR); CARNES, Mark, Andrews, Indiana 46702 (US)
(74) Representative: Booth, Catherine Louise
(86) International application number: PCT/US2006/002445
(87) International publication number: WO 2007/084139

(56) References cited:
- EP-A1- 1 559 963
- EP-A2- 0 710 804
- US-A- 4 307 775
- US-A- 5 597 354
- US-A- 5 707 005
- US-A- 6 126 540
- US-A1- 2003 177 777
- US-A1- 2005 124 286
- US-B1- 6 848 266
- US-B2- 6 979 361

## Description

### Field of the Invention

This invention relates generally to the control of indoor air quality and more particularly to the control of the levels of CO₂ and volatile organic compounds and other airborne contaminates in the breathable air of interior building spaces.

### Background of the Invention

Indoor air quality ("IAQ") refers to the quality of the breathable air in indoor living and working spaces. Indoor CO₂ levels, volatile organic compounds ("VOC") and other airborne organic matter, including bacteria all contribute to worsening the IAQ in a given indoor breathing space. While air conditioning systems (also known as comfort systems, including both heating and cooling functions) are in common use today in both residential homes and offices, the control of factors that are detrimental to IAQ remains problematic. Even though most interior spaces are somewhat sealed to improve heating and air conditioning efficiency, there has been some effort to intentionally draw limited amounts of outside fresh air into indoor spaces to improve the quality of the interior breathable air by dilution. The trade off is an increase in energy consumption required to maintain a comfortable indoor air temperature.

Undesirable levels of volatile organic compounds ("VOC") and other airborne organic matter, including bacteria can also be lowered by air purifiers, such as UV light purifiers, Ionization purifiers, Ionizers, and electrostatic purifiers including electrostatic precipitators (ESP). Air purifiers can be placed in a room as a stand alone system or added to the ductwork of a new or existing heating ventilation and air conditioning (HVAC) system. One problem with a UV purifier system is that the UV lamp consumes energy (see for example patent document US-A-6126540). Also, since UV light from the purifier is potentially harmful to human eyesight, a person cannot safely view the UV lamp in operation. It is therefore difficult to know, especially when the air conditioner is hidden from the end user, when the light source has failed rendering the purifier ineffective.

What is needed is an indoor air quality ("IAQ") control board to integrate the control of the diluting fresh air intake and the air purifier functions into an air conditioner system. Further, in the case of a UV purifier, there is a need for an IAQ board that can automatically alert a person that the UV light source has failed.

### Summary of the Invention

According to the invention there is provided an air conditioning system as set forth in claim 1.

### Brief Description of the Drawings

For a further understanding of these and objects of the invention, reference will be made to the following detailed description of the invention which is to be read in connection with the accompanying drawing, where:
FIG. 1 shows a block diagram of an embodiment of the inventive IAQ system;
FIG. 2 shows a block diagram of an IAQ fresh air damper system using a proportional damper;
FIG. 3 shows a block diagram of an IAQ fresh air damper system using a single stage of a two position fresh air damper;
FIG. 4 shows a block diagram of an IAQ fresh air damper system using a two stage fresh air damper;
FIG. 5 shows a block diagram of an IAQ fresh air damper system using a single stage fresh air damper and an exhaust damper;
FIG. 6 shows a block diagram of an IAQ UV purifier system;
FIG. 6A shows a block diagram of an IAQ UV purifier system with a passive filter;
FIG. 6B shows a block diagram of an IAQ UV purifier system with a passive filter and a catalyst honeycomb structure;
FIG. 7 shows a block diagram of an exemplary IAQ option board;
FIG. 8 shows a mechanical diagram of an exemplary IAQ option PCB including connectors; and
FIG. 9 shows a mechanical diagram of an exemplary IAQ option PCB including connectors mounted on an air conditioner control board.

It is to be noted that most of the drawings are symbolic block diagrams and that they are representative of the electrical and mechanical functions and operations described herein. Drawings are not necessarily drawn to scale, nor do electro-mechanical block diagrams show all terminal or winding connections.

### Detailed Description of the Invention

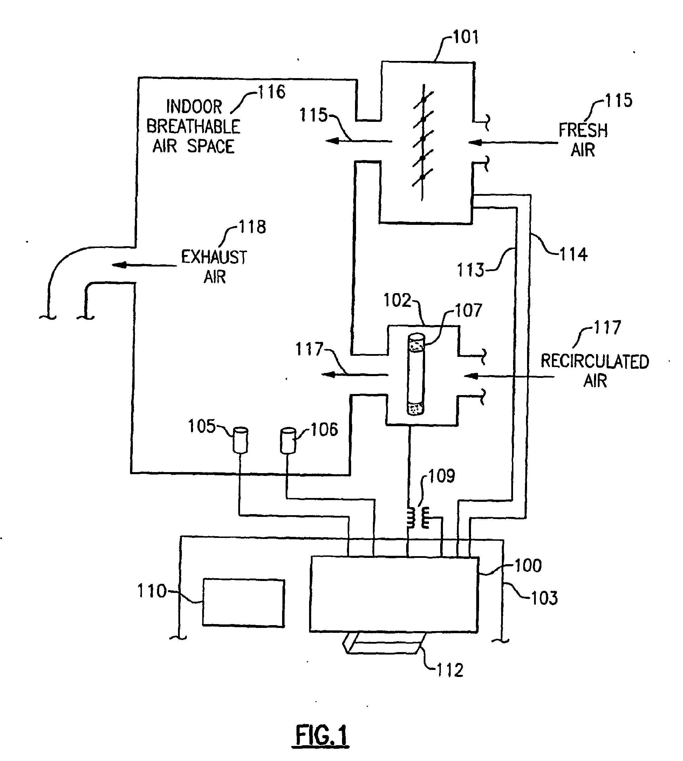

An indoor air quality ("IAQ") board 100 as shown in the system of FIG. 1 can control at least one fresh air damper 101 and at least one UV light purifier 102. Indoor air quality ("IAQ") board 100 can be directly connected to an air conditioner control board 103 that controls an air conditioner system (not shown). The term "air conditioner" is defined herein and used throughout as referring to a system that can condition air, such as a HVAC "comfort" system. Such an air conditioning or comfort system can be cool only, heat only, or include both cooling and heating functions. IAQ board 100 can be plugged directly into the air conditioner control board 103, by representative connector 112 as shown in FIG. 1. IAQ board 100 can also be connected to air conditioner control board 103 by pins, wires, ribbon cable, or connected by a wired or cabled connection (not shown). IAQ board 100 can accept inputs from a CO₂ sensor 105, a total volatile organic compound ("TVOC") sensor 106, and / or a humidity sensor (not shown). Other sensors (not shown) can be used in addition to or in place of sensors 105 and 106. Such sensors can sense VOC or non-VOC gases that can be harmful to human or animal health. Such gases include poison gases such as Sarin and other gases used as chemical weapon gases including siloxanes and polymerized hydrocarbons. Less harmful, but still undesirable gases, such as ozone can also be sensed by a gas sensor used in place of, or in addition to sensors 105 and 106. Fresh air damper 101 controls the amount of fresh air 115 allowed into the indoor breathable airspace 116 to improve IAQ by dilution. Fresh air damper 101 is shown in FIG. 1 as a proportional damper having an electrical control signal line 113 and an electrical air flow signal 114. Fresh air damper 101 can also be a one or two stage fresh air damper without proportional control. IAQ board 100 can also have a control output to control UV purifier 102 including UV lamp 107 and a control input to receive a UV lamp current monitoring signal from UV purifier current monitor 109 to remotely sense a failure of UV lamp 107. Air conditioner control board 103 (the main board) can also include interface 110 to accomplish communications between the IAQ board and air conditioner control board 103.

While the operation of various embodiments of the invention is described in detail below, in general, IAQ is measured by sensors 105 and 106. Based on the IAQ measurements, fresh air damper 101 is opened to allow the diluting fresh air to reduce indoor CO₂ levels, levels of volatile organic compounds ("VOC"), and levels of other airborne organic matter. UV purifier 102 is turned on to reduce indoor levels of volatile organic compounds ("VOC") and levels of other airborne organic matter. In addition to improving the IAQ, in some embodiments as is described below in more detail, the relative usage of fresh air dilution (from operation of the fresh air damper) or purification, such as UV purification, can be controlled in such as way as to reduce HVAC energy consumption based on the difference between indoor and outdoor air temperature.

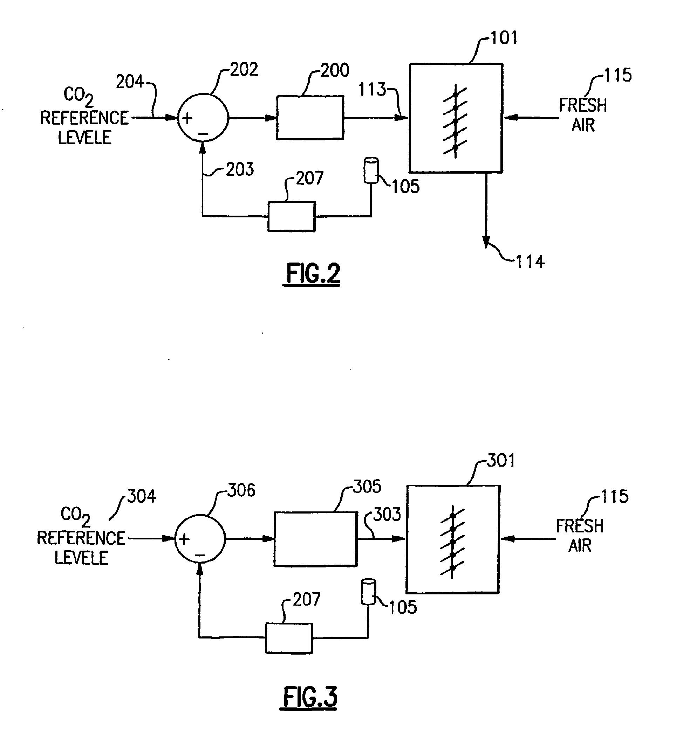

In a first embodiment of the invention as shown in FIG. 2, IAQ can be improved using a proportional fresh air damper 101 to reduce and control CO₂ levels as measured by CO₂ sensor 105. CO₂ sensor 105 monitors the CO₂ level in the interior space. CO₂ reference level 204 can be compared by an analog or digital error amplifier or level comparator 202 to the measured CO₂ level 203 in the interior space as measured by CO₂ sensor 105. If the CO₂ level in the interior space is above the CO₂ reference level by some predetermined amount, a proportional fresh air damper 101 can be controlled to open more to let in more fresh air to bring the CO₂ level in the interior space down to an acceptable level. Control electronics 200 can command fresh air damper 101 to any position across a range of positions generally from full closed to full open. Typically fresh air damper 101 can be commanded or set to a particular valve opening by receiving an analog signal, such as in a range of 0 to 10 Volts, where for example, 0 Volts commands fully closed operation and 10 Volts sets the damper valve full open. CO₂ sensor 105 typically can generate an analog signal that can be further converted to a 0 to 5 volt analog signal using standard electronic signal conditioning as represented by signal conditioning block 207. The control electronics 200 to regulate the damper can be on the IAQ board, or in part on IAQ board 100 and in part on air conditioner control board 103. It should further be noted that the analog signal from CO₂ sensor 105 can be converted to a digital signal and that the comparison between CO₂ sensor 105 and the CO₂ reference level could be done as digital comparison as by a microcomputer. The control electronics can include an analog loop filter or a digital filter in hardware or software where the control loop is implemented as a digital control loop.

The vane setting or position of proportional damper 101 is what causes a metered amount of fresh air flow into the interior breathing space. An additional benefit of using proportional damper 101 is that proportional damper 101 can also provide an air flow signal 114 that is a measure of the fresh air flow caused by any given vane setting of proportional damper 101. Air flow signal 114 can be communicatively connected to a building management system ("BMS") so that a building manager can advantageously be made aware of the quantity of outside air being brought into the interior spaces to project increased energy usage due to the introduction of volumes of fresh air at a different temperature and humidity than the conditioned air already present in the interior space. Using this information, the building manager can estimate additional energy charges to condition building spaces due to the introduction of the fresh air. While such computations and estimates might be less important in residential or small and medium size office buildings, the additional cost to tenants in a large building space caused by the introduction of fresh air can be of great interest to both the tenants and the building manager.

FIG. 3 shows a block diagram of another embodiment to control the level of CO₂ in the interior space using a single stage fresh air damper 301. Here, damper 301 has two operating states such that the vanes are either open or closed as controlled by block 305 having controlled output 303. Block 305 can reside entirely within IAQ board 100 or in part on IAQ board 100 and in part on air conditioner control board 103. Controlled output 303 is typically, but not limited to, a switchable AC power output provided by a standard electronic switch element such a relay, silicon controlled rectifier ("SCR") or TRIAC (not shown). In this embodiment, the analog signal from CO₂ sensor 105 can be compared to CO₂ reference level 304 using comparator 306 to determine whether fresh air damper 301 should be opened or closed. The comparator can further use hysteresis or delay to prevent excessive operation of fresh air damper 301. It should further be noted that the analog signal from CO₂ sensor 105 can be converted to a digital signal and that the comparison between CO₂ sensor 105 and the CO₂ reference level could be done as digital comparison as by a microcomputer. The control loop can be an analog or a digital circuit or accomplished in hardware or software in the case of a digital comparison.

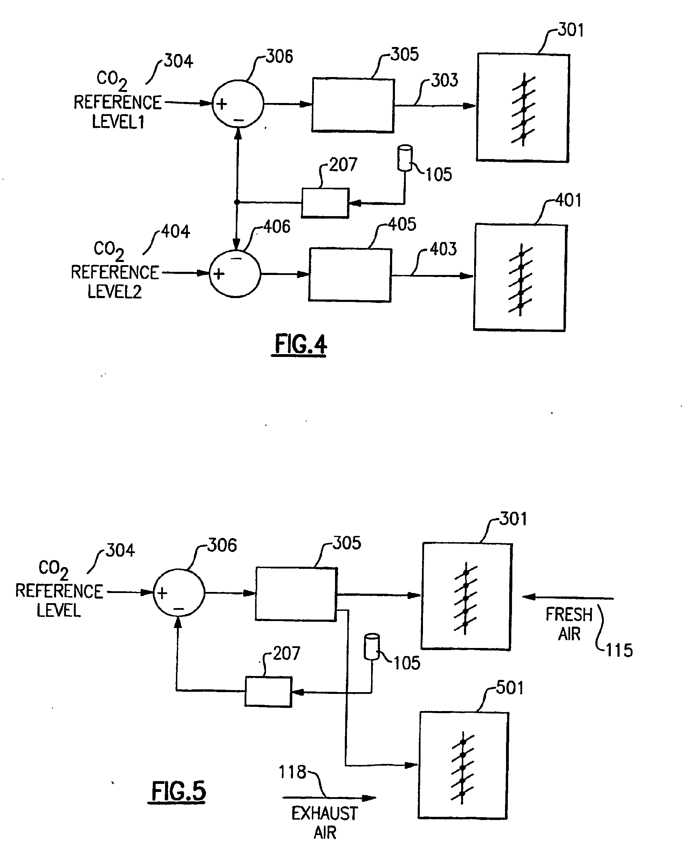

FIG. 4 shows a block diagram of yet another embodiment to control the level of CO₂ in the interior space using a two stage fresh air damper, shown as stage one fresh air damper 301 and stage two fresh air damper 401. The two stages are controlled by Blocks 305, 405. Blocks 305, 405 can reside entirely within IAQ board 100 or in part on IAQ board 100 and in part on air conditioner control board 103. In this embodiment, the analog signal from CO₂ sensor 105 can be compared to both a first CO₂ reference level 304 and a second CO₂ reference level 404 to determine whether fresh air damper 301 and / or 401 should be opened or closed. The comparators 306 and 406 can further use hysteresis or delay to prevent excessive operation of fresh air dampers 301 or 401. In this embodiment, a second CO₂ reference level 404 controls the second stage damper 401, typically to provide a second higher level of airflow to more quickly reduce the level of CO₂ in the interior space for higher CO₂ levels. The comparators 306, 406 and control electronics 305, 405 for the embodiment of FIG. 4 can reside in part on IAQ board 100 and in part on control board 103. As in FIG. 4, the analog signal from CO₂ sensor 105 can be converted to a digital signal and that the comparison between CO₂ sensor 105 and the CO₂ reference level could be done as digital comparison as by a microcomputer. Where used, hysteresis or delay functions can be implemented in an analog or a digital circuit or accomplished in hardware or software in the case of a digital comparison.

FIG. 5 shows a block diagram of another embodiment to control the level of CO₂ in the interior space using a two stage fresh air damper comprising fresh air damper 301 as stage one and exhaust air damper 501 as stage two. Here, there is only one CO₂ reference level 304 and one fresh air damper 301 as shown in FIG. 3, but a second stage damper 501 can be operated when damper 301 is opened. In this embodiment, second stage damper 501 can serve as an exhaust damper to prevent the interior space from becoming pressurized by the introduction of the additional fresh air flow generated when damper 301 is opened. The analog and / or digital control electronics for the embodiment of FIG. 5 can reside in part on IAQ board 100 and in part on air conditioner control board 103.

It should be noted that the exhaust damper 501 could also be used with the system of FIG. 1. In this case control electronics 200 would have an additional open / closed output for the control of exhaust damper 501 in addition to proportional damper control line 113. While less common, a proportional exhaust damper can be used as well. In this case, the exhaust damper control would be a second analog output similar to control line 113 for the fresh air damper. Alternatively, another exhaust system or mechanism not controlled by IAQ board 100 or control board 103 can be provided to prevent increased pressurization of the interior space due to the introduction of fresh air to control the level of CO₂ in the interior space.

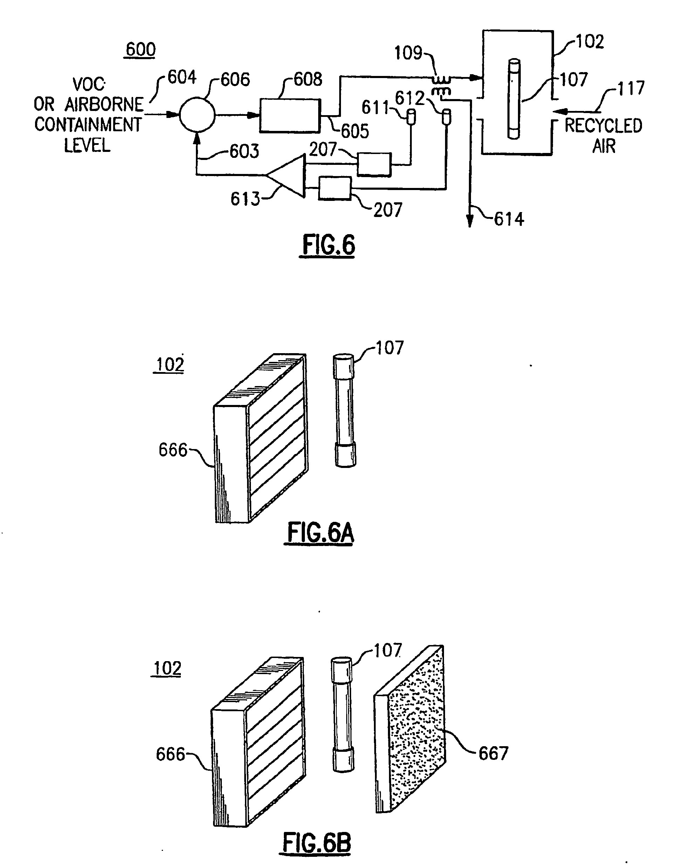

FIG. 6 shows an embodiment of a UV purifier system 600 according to the invention. UV purifier 102 comprises UV lamp 107 that can be turned on or off by controlled output 605. UV purifier 102 can be of one of two forms. FIGs. 6A and 6B show two embodiments of UV purifier 102. In FIG. 6A, the air to be cleaned is introduced into UV purifier 102 through a passive filter 666 (such as screening, mesh, or fiber) and passes over UV lamp 107. In this case mostly bio-aerosols are inactivated with little or no improvement in VOC levels. FIG. 6B shows an embodiment of UV purifier 102 further comprising photo catalyst 667 for abating both bio-aerosols and gases, including VOCs. Catalyst 667 can be conveniently made by coating a supporting structure such as a honeycomb structure with titanium dioxide (TᵢO₂).

In order to detect passive filter 666 clogging and to generate a signal or warning to call for maintenance, the pressure difference between the inlet and the outlet of the filter 666 can be measured. Such air pressure measurements can be made by two pressure sensors (not shown) or by a single differential pressure sensor (not shown) measuring the pressure between the inlet and outlet of filter 666. The pressure readings can be input to the IOB. When a pressure differential is detected to be beyond a defined pressure differential threshold, a warning can be sent to the BMS causing the BMS to generate a filter change indication such as by a text display or graphic indication on a BMS display and/or by other visual or audio "filter change" signals, including lights, audio alarms, and pre-recorded audio warnings.

Turning back to FIG. 6, Sensors including gas sensor 611 and photo sensor 612 that can be used to determine the levels of volatile organic compounds ("VOC") and other organic matter, including bacteria suspended in the air. The sensor outputs can be transformed to standard analog ranges such as 0-5 V by use of known signal conditioning techniques by signal conditioners 207. The sensor signals can be combined by summing, averaging, weighted averaging as by analog function block 613, or made as selectable inputs to control UV purification lamp 107. Comparator 604 compares the levels from the analog sensors to a reference level 604. When the sensor levels indicate a level of undesirable materials such as VOCs or bacteria in the air, the UV lamp in the UV purifier can be turned on to start the bring the contaminant levels down.

An additional feature of UV purifier 600 is that the UV lamp power supply current can be measured remotely by monitoring the output current sensing transformer 109. For those not skilled in the electrical art, it is noted that the single line 614 from transformer 109 is representative of at least two transformer connection points connected to an analog receiving circuit, such as can be located on IAQ board 100. In a UV lamp fault mode, UV lamp 107 current falls below some threshold level, or to zero, indicating a failure of UV purifier 102.

It should also be noted that any of the above described embodiments can be used to control a plurality of fresh air dampers or air purification systems. Multiple dampers or purification systems can be controlled by one or more control systems, or multiple control systems can control a multiple fresh air dampers and / or purifiers. It should further be noted that in control systems such as the one shown in FIG. 6, instead of integrating two or more sensor inputs into a single control system, multiple control systems can control one or more dampers or purifiers to control airborne contaminant levels.

It should also be understood that any of the sensor and control systems described herein can be implemented as analog or digital systems or more commonly using mixed signal (analog and digital) circuits. For example, a sensor output can be an analog signal and can further be conditioned by an analog signal conditioning block to introduce an analog function, most typically scaling and offset. Or, it can be contemplated that some sensors might comprise internal signal conditioning in combination with internal analog to digital converters and output a digital signal to IAQ board 100. Also, some control systems can be implemented as analog control loops or analog control systems using analog comparators. In some embodiments, the output of the analog controls or analog comparisons can then be converted to digital signals to integrate into a digital air conditioner control included on air conditioner control board 103. Alternatively, it is contemplated that in other embodiments that most or all of the functions of IAQ board 100 could be accomplished by mostly digital circuits.

IAQ board 100 can also be in the form of an IAQ option board ("IOB") to be mounted in or near the air conditioner control board 103. The IOB can comprise electrical circuitry to receive and condition an electrical value from one or more IAQ sensors and include a plurality of output circuits to set the position of fresh air damper valve 101 and the state of an air purifier, such as UV purifier 102. A circuit or computer program then determines the fresh air damper position and the state of the UV purifier. The circuit or computer program can be located on the air conditioner control board. The IOB can also send an electrical representation of one or more IAQ sensors (conditioned signals) to air conditioner control board 103. A microprocessor on the air conditioner control board running a program including an IAQ algorithm can determine a calculated valve position for the fresh air damper and an operating state for the UV purifier and send the calculated valve position and the UV purifier state to the IOB. The IOB can then set the fresh air damper valve position and the air purifier state.

In the preferred embodiment as shown in FIG. 1, the control of the fresh dampers and the UV purifier can be integrated and controlled by a common IAQ control circuit 100 co-resident with an air conditioner and common algorithm where a part of the control system is digital. The combined system comprising both a fresh air damper system 120 and an air purifier, such as UV purifier system 600 is particular advantageous in that there can be some overlapping of the control of all IAQ factors between the fresh air and the purification system. For example, the introduction of fresh air into the indoor air space can also lower the levels of VOCs or other airborne contaminants, especially those originating or out gassing from indoor sources. Thus in some cases the energy to needed to run the purifier can be saved by the introduction of more fresh air. Also, reduced operation of the purifier can extend the life of the UV lamp in the case of a UV purifier. This method of operation is can be particularly effective when the outdoor air temperatures are relatively close to the desired indoor air temperature, or the outdoor air temperature differs in a direction helpful to provide needed cooling or heating to reach the desired indoor air temperature. Conversely, the American Society of Heating, Refrigerating and Air-Conditioning Engineers, Inc. (ASHRAE) Standard 62-89, "*ventilation for Acceptable Indoor Air Quality*" permits a lower fresh air flow where an HVAC system includes an air purifying system to improve IAQ. For example, cool evening air might be helpful to reduce the interior temperatures following a warm daytime outdoor temperature. Similarly, it might be advantageous to run the purifier longer in situations where the outdoor air temperature is very low or very high. In this case, while bringing in large volumes of outside air might improve the IAQ, significant energy costs can result from the additional heating or air conditioning needed to bring the fresh air to the desired indoor air temperature. Thus it can be seen that an IAQ board that can control both the fresh air damper system and the purifier can be advantageously used both to improve IAQ and at the same time to reduce energy costs encountered through heating and cooling.

Many HVAC systems are able to integrate control and sensor information into a digital HVAC computer system generally called a building management system ("BMS"). A BMS can be helpful to both optimize HVAC operation, including air conditioner and IAQ system operation as well as to provide energy consumption reports for the various HVAC components. More sophisticated BMS computers can generate such reports for individual tenants in larger office spaces. An IAQ board and / or the air conditioner control board that it is electrically coupled to, can further communicate with a BMS by a network connection. While such a network connection can be made by a conventional computer networking method, the connection can also be advantageously made by a HVAC network connection such as the proprietary Carrier Communications Network system manufactured by the Carrier Corporation or by any another suitable "open protocol" system.

An air quality sensor can also be located outside of a building to sense and transmit Outdoor Air Quality (OAQ) information. An OAQ sensor can be an analog sensor using further signal conditioning, such as can be accomplished by on the IAQ board or an OAQ sensor can include on board signal conditioning, or an "intelligent" OAQ sensor can have both on board signal conditioning and an analog to digital converter (ADC) and digital electronics suitable to send a digital OAQ reading to the IAQ board, the air conditioner control board, or directly to the BMS. If the outside pollution levels become hazardous as detected by an OAQ sensor, such as when an OAQ level is sensed to be above a predefined OAQ level, the BMS can send an order thru the building network to one or more building air handler units (AHU) to stop fresh air flow. An IAQ board, such as an IOB could then also close the fresh air damper as a second level of safety. Where an OAQ sensor is connected through an IAQ board, the IAQ board in conjunction with algorithms typically running on the air conditioner control board can command the fresh air damper closed independently of the BMS. The IAQ board can also receive a signal from the BMS (directly or via the conditioner control board) to close the fresh damper in response to a high OAQ reading. Where very high pollution levels are detected through one or more sensors, such as one or more OAQ sensors, one or more IAQ sensors, or a combination of IAQ and OAQ sensors, the BMS can generate visual and/or audible warnings. Visual and/or audible warnings can include, but are not limited to visual warnings on remote HVAC status screens, BMS screens, audible warnings at HVAC or building status terminals, lights, sirens, and/or pre-recorded audio warnings.

### Example:

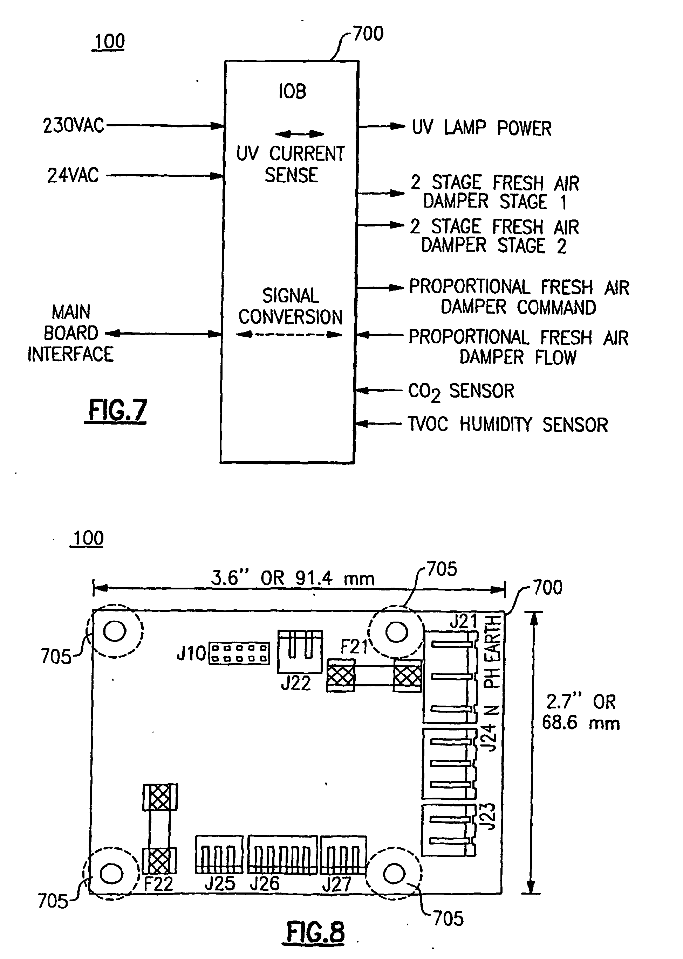

An example of an IAQ board 100 in a preferred embodiment as a plug in IAQ option ("IOB") printed circuit board ("PCB") 700 to an air conditioner board 103 will now be described in more detail using a block diagram and exemplary printed circuit boards. The block diagram of FIG. 7 shows the inputs and outputs ("I/O") of the IOB 700. 24VAC power is provided to the IOB PCB via an electrical connector to power such devices as a proportional fresh air damper, CO₂ sensor, and TVOC/humidity sensor. 230 VAC power is provided to the IOB via another connector to power external devices such as the two stage fresh air damper and the UV Lamp. Here most of the input output functionality for sensors and controlled devices is provided on the IOB PCB 700 and the comparison and control functions are provided on the air conditioner control board 103 (not shown in FIG. 7). IOB PCB 700 converts input and output signals between main board and the external devices. IOB PCB 700 typically receives information through inputs connectors from IAQ sensors including CO₂ sensor(s), VOC (Volatile Organic Compounds) sensors, and humidity sensors. IOB PCB 700 further includes the functions of switchable power to UV lamp, UV lamp current monitoring, switchable power to a two stage fresh air damper, including switchable power to stage I and stage II of the two stage fresh air damper, an analog proportional fresh air damper command, a proportional fresh air damper air flow monitoring signal, CO₂ sensor monitoring, TVOC or humidity sensor monitoring, and signal conditioning. It can thus be seen that IOB PCB 700 includes sufficient numbers and types of I/O to accomplish any of the functionality described in FIGs. 1 to 6.

FIG. 8 shows an embodiment of an IOB PCB 700 to accomplish the functions shown and described with respect to FIG. 7. IOB PCB 700 can be affixed to an air conditioner board 103 (not shown in FIG. 8) by mounting holes 705. Nylon fasteners (not shown) can be used in conjunction with mounting holes 705 for a mechanical connection to air conditioner board 103 allowing IOB PCB 700 to be installed without tools or screws by use of snap-in fasteners. A plastic connector such as J10 can be used to electrically connect IOB PCB 700 to air conditioner board 103. Fuses, such as F22 and F21 can be used to protect input power supply lines and switched power outputs. Such protection is particularly advantageous regarding 230 VAC inputs and outputs. Plastic PCB connectors J22, J25, J26, J23, J24, and J21 can be configured as power input and output connectors. Such plastic connectors are available from the Molex Corporation and other connector manufacturers. A typical configuration of the connectors on IOB PCB 700 is listed as follows: J21 is used for 230 VAC power supply to power external UV lamps and a two stage fresh air damper; J22 is used for 24 VAC power supply to power a proportional Fresh air damper, CO₂ sensor, TVOC and a humidity sensor. J10 provides the IOB PCB 700 electrical interface connection to the main board. Here, the I/O of the IOB PCB 700 is controlled directly by a microprocessor located on air conditioner board 103 and IOB PCB 700 will convert signals between the main board and external devices as follows: pin 1, UV lamp command; pin 2, UV lamp current; pin 4 fresh air damper stage 1 command; pin 4, fresh air damper stage 2 command; pin 5, proportional air damper command; pin 6, proportional fresh air damper air flow; pin 7, CO₂ sensor; pin 8, TVOC / humidity sensor; pin 9, 12 Volt power; pin 10, ground. Connector J23 is used to control the UV lamp. IOB PCB 700 converts the 0-5V digital signal from the main board into a 230VAC discrete output to illuminate the UV lamps. To accomplish UV lamp failure detection, a current transformer ("CT") (not shown) can be installed on IOB PCB 700 such that the UV lamp output current passes through this CT. This CT will measure the current flowing through the UL Lamp (pin 1) and convert the signal to a 0-5V analog signal for air conditioner board 103. J24 of IOB PCB 700 provides a two-stage command to control the two-stage fresh air damper. For both stage 1 and stage 2, the IOB PCB 700 converts the 0-5V digital signal from the main board into a 230 VAC discrete output to provide power to separately energize stage 1 and stage 2. A 5 Volt signal (logic 1) provided to IOB PCB 700 turns on the discrete output and a 0V signal (logic 0) turns off the discrete output. J26 is used for the proportional fresh air damper. IOB PCB 700 provides command and monitoring functions to the proportional fresh air damper. IOB PCB 700 converts the 0-5V analog signal from the main board into a 0-10 Volt analog output that is proportional to the size of the valve opening desired. The proportional fresh air damper will provide a 0-10 Volt airflow signal to the IOB PCB 700 for the proportional fresh air damper monitoring function and can convert the signal to a 0-5 V analog signal for air conditioner board 103. Typically the proportional fresh air damper airflow signal will have the following characteristics: 0- 10 VDC, proportional to the maximum pressure set at valve calibration. J25 is used for the CO₂ sensor. IOB PCB 700 can monitor a CO₂ sensor. The CO₂ sensor signal is typically converted to a 0-5 Volt signal for air conditioner board 103. J27 is used for the TVOC or humidity Sensor. IOB PCB 700 can monitor a TVOC and / or a humidity sensor connected to J27 and IOB PCB 700 can further convert the TVOC or humidity sensor signal to a to a 0-5 Volt signal for use on air conditioner board 103.

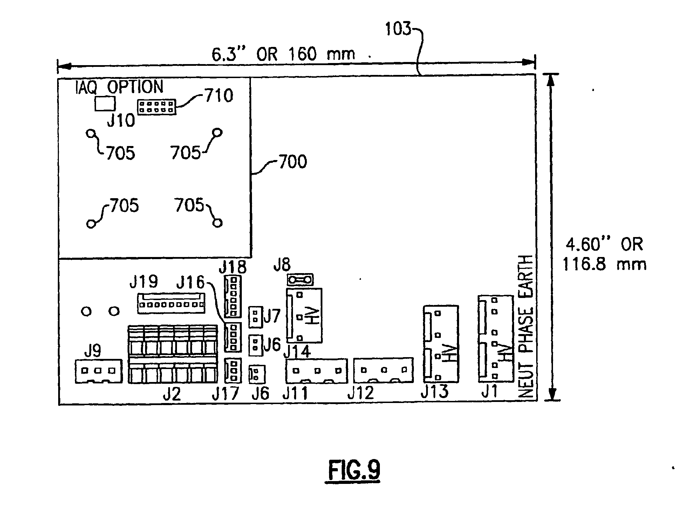

FIG. 9 shows IOB PCB 700 plugged into air conditioner control board 103 via connector J10 and mounting holes 705, preferably by nylon fasteners (not shown). The mating plug for J10 on conditioner control board 103 is not visible in FIG. 9. While the remaining electrical connections seen on the lower portion of conditioner control board 103 are typically used to receive power and to control air conditioner functions, in some embodiments, such connectors can also be used to supply power to IOB PCB 700 via appropriate connectors and cables. Similarly, in embodiments where a device to be controlled by IOB PCB 700 is already directly connected to air conditioner board 103, a cable with appropriate connectors can be connected from an IOB PCB 700 connector to an air conditioner board 103 connector to facilitate an input or control function being supplied by the additional option board capability introduced by adding IOB PCB 700 to an air conditioner system. In most embodiments, IOB PCB 700 provides additional inputs/outputs capabilities and is controlled by a micro-controller (not shown) and software resident on air conditioner board 103 in a mixed analog - digital implementation. Typically IOB PCB 700 and air conditioner board 103 are mounted within a control box (not shown) which is itself mounted in or on an air-conditioner system. In other embodiments, where there is not enough room in an existing housing for air conditioner board 103, IOB PCB 700 can be housed elsewhere and connected by one or more dedicated cables. Air conditioner board 103 can further include an hours counter (not shown). The hours counter can be used by the A/C system manager to monitor the filter maintenance cycle. When the filters are changed, the counter can be reset to 0 hours. After a certain number of hours (defined as a function of the filter lifetime) a warning can be sent to the A/C system manager through the BMS.

The IOB PCB 700 is also able to send information on the controlled system through the main board to a BMS allowing to the A/C system manager to check the TAQ parameters of each air-conditioner. IOB PCB 700 is further able to broadcast information to other IOB through the main board, BMS and using a communication bus such as the Carrier Communications Network ("CCN") system. Such communications allow building managers to do installation cost savings in an open space for example by installing only one CO₂ sensor in one air-conditioner for the open space. Here, IOB PCB 700 can also send the CO₂ concentration information to other air conditioners installed in this open space such as over the CCN.

While the present invention has been particularly shown and described with reference to the preferred mode as illustrated in the drawing, it will be understood by one skilled in the art that various changes in detail may be effected therein without departing from the scope of the invention as defined by the claims.

## Claims

1. An air conditioning system to improve indoor air quality ("IAQ") comprising:
an air conditioner to receive indoor air from an indoor space (116), to heat or cool the air, the air conditioner to then return conditioned air to the indoor space;
an air conditioner control board (103), the air conditioner control board mounted in or on the air conditioner, the air conditioner control board electrically connected to the air conditioner to control the functions of the air conditioner;
an IAQ option board ("IOB") (100) electrically coupled to the air conditioner control board, the IOB configured to accept electrical inputs from at least one IAQ sensor;
a fresh air damper (101) electrically connected to the IOB (100), the fresh air damper (101) having a valve position, the valve position determining the flow of fresh air (115) into the indoor space (116), the IOB (100) controlling the position of the valve; and
an air purifier (102), the air purifier (102) situated such that air from the indoor space (116) passes through the purifier (102), the air purifiers (102) electrically coupled to and controlled by the IOB (100), wherein the IOB (100) receives input from the at least one IAQ sensor and the IOB respectively commands the valve position of the fresh air damper (101) and the operation of the air purifier (102) based at least in part on the input from the at least one IAQ sensor (106) to improve the IAQ of the indoor space (116);
wherein the purifier (102) is a UV purifier having a UV purifying lamp (107) with an ON and an OFF state, the UV purifier (102) being situated such that air from the indoor space (116) passes by and near the UV purifying lamp (107).

2. The air conditioning system of claim 1 wherein the fresh air damper (101) is a proportional fresh air damper.

3. The air conditioning system of claim 1 wherein the fresh air damper is a two stage damper.

4. The air conditioning system of claim 1 wherein the fresh air damper is a two stage damper and the first stage air damper (301) provides a first air flow of fresh air and a second fresh air damper (401) provides a second air flow of fresh air.

5. The air conditioning system of claim 1 further comprising an exhaust damper (501), wherein the exhaust damper is opened when the fresh air damper (301) is opened by the IOB (100).

6. The air conditioning system of claim 5 further comprising a current sensing transformer ("CT") to measure an electrical currant flow to the UV purifier (102) wherein an electrical output of the CT is electrically coupled to the IOB (100) and the IOB (100) remotely detects a failure of the UV purification lamp (107).

7. The air conditioner system of claim 1 wherein the at least one IAQ sensor (105, 106) is selected from the group of IAQ sensors consisting of CO₂ sensor, volatile organic compound ("VOC") sensor, total volatile organic compound ("TVOC") sensor, temperature sensor, humidity sensor, ozone sensor, Sarin gas sensor, bio-weapons agent sensor, and gas sensor.

8. The air conditioner system of claim 1 wherein the air conditioner system comprises at least IAQ sensor (106), an outdoor air temperature sensor to measure an outdoor air temperature, and an indoor air temperature sensor to measure an indoor air temperature and the IOB sets the fresh air damper position and the state of the purifier such that the purifier is used to improve IAQ more than air dilution by fresh air damper when such operation would lower energy usage by lowering the amount of energy needed to condition the temperature of the indoor air when the outdoor temperature is substantially higher or lower than the indoor room temperature.

9. The air conditioner system of claim 1 wherein the air conditioner system comprises at least one IAQ sensor (106), an outdoor air temperature sensor to measure an outdoor air temperature, and an indoor air temperature sensor to measure an indoor air temperature and the IOB sets the fresh air damper position and the state of the purifier such that the purifier is used less to improve IAQ than air dilution by fresh air damper when such operation would lower energy usage by lowering the amount of energy needed to condition the temperature of the indoor air when the outdoor temperature is substantially similar to the indoor room temperature, or the outdoor temperature differs from the indoor room temperature such that introduction of outdoor air would cause the indoor temperature to change towards a desired indoor air temperature.

10. The air conditioner system of claim 1 wherein the IOB (100) comprises electrical circuitry to receive and condition an electrical value from that at least one IAQ sensor (105) and a plurality of output circuits to set the position of the fresh air damper valve and the state of the purifier wherein a circuit or computer program that determines the fresh air damper position and the state of the purifier is located on the air conditioner control board.

11. The air conditioning system of claim 10 wherein the JOB (100) sends an electrical representation of the at least one IAQ sensor (the conditioned signal) to the air conditioner control board (103) and a microprocessor on the air conditioner control board running a program including an IAQ algorithm determines a calculated valve position for the fresh air damper and an operating state for the purifier and sends the calculated valve position and the purifier state to the IOB wherein the IOB sets the fresh air damper valve position and the purifier state.

12. The air conditioner system of claim 11 further comprising at least one outdoor air quality (OAQ) sensor wherein when an OAQ level is sensed to be above a predefined OAQ level, the BMS turns off an air handler unit (AHU) and the IOB (100) closes the fresh air damper (101).

13. The air conditioner system of claim 1 wherein the UV purifier (107) comprises a passive filter (666) or a passive fitter (666) and a photocatalyst (667).

14. The air conditioner system of claim 13 wherein a pressure difference between the inlet and the outlet of the passive filter (666) is measured and when the pressure difference exceeds a threshold value, a filter change warning is generated.

## Patentansprüche

1. Klimatisierungssystem zum Verbessern der Innenraumluftqualität ("IAQ"), umfassend:
eine Klimaanlage zum Aufnehmen von Innenraumluft von einem Innenraum (116), um die Luft zu erwärmen oder zu kühlen, wobei die Klimaanlage sodann aufbereitete Luft wieder an den Innenraum abgibt;
eine Klimaanlagensteuertafel (103), wobei die Klimaanlagensteuertafel in oder an der Klimaanlage angebracht ist, wobei die Klimaanlagensteuertafel elektrisch mit der Klimaanlage verbunden ist, um die Funktionen der Klimaanlage zu steuern;
eine IAQ-Optionstafel ("IOB") (100), die elektrisch an die Klimaanlagensteuertafel gekoppelt ist, wobei die IOB dazu konfiguriert ist, elektrische Eingänge von wenigstens einem IAQ-Sensor zu empfangen;
eine Frischluftklappe (101), die elektrisch mit der IOB (100) verbunden ist, wobei die Frischluftklappe (101) eine Ventilstellung aufweist, wobei die Ventilstellung den Fluss von Frischluft (115) in den Innenraum (116) steuert und die IOB (100) die Stellung des Ventils steuert; und
einen Luftreiniger (102), wobei der Luftreiniger (102) derart angeordnet ist, dass Luft vom Innenraum (116) durch den Reiniger (102) strömt, wobei der Luftreiniger (102) elektrisch an die IOB (100) gekoppelt ist und von dieser gesteuert wird, wobei die IOB (100) einen Eingang von dem wenigstens einen IAQ-Sensor empfängt und die IOB jeweils die Ventilstellung der Frischluftklappe (101) und den Betrieb des Luftreinigers (102) wenigstens teilweise auf Grundlage des Eingangs von dem wenigstens einen IAQ-Sensor (106) vorgibt, um die IAQ des Innenraums (116) zu verbessern;
wobei der Reiniger (102) ein UV-Reiniger mit einer UV-Reinigungslampe (107) mit einem EIN- und einem AUS-Zustand ist, wobei der UV-Reiniger (102) derart angeordnet ist, dass Luft vom Innenraum (116) in der Nähe der UV-Reinigungslampe (107) an dieser vorbei strömt.

2. Klimatisierungssystem nach Anspruch 1, wobei die Frischluftklappe (101) eine Proportionalfrischluftklappe ist.

3. Klimatisierungssystem nach Anspruch 1, wobei die Frischluftklappe eine Zweistufenklappe ist.

4. Klimatisierungssystem nach Anspruch 1, wobei die Frischluftklappe eine Zweistufenklappe ist und die Luftklappe der ersten Stufe (301) einen ersten Luftstrom von Frischluft bereitstellt und eine zweite Luftklappe (401) einen zweiten Luftstrom von Frischluft bereitstellt.

5. Klimatisierungssystem nach Anspruch 1, ferner umfassend eine Abluftklappe (501), wobei die Abluftklappe geöffnet wird, wenn die Frischluftklappe (301) von der IOB (100) geöffnet wird.

6. Klimatisierungssystem nach Anspruch 5, ferner umfassend einen Strommesstransformator ("CT") zum Messen eines elektrischen Stromflusses an den UV-Reiniger (102), wobei ein elektrischer Ausgang des CT elektrisch an die IOB (100) gekoppelt ist und die IOB (100) einen Fehler der UV-Reinigungslampe (107) aus der Ferne erkennt.

7. Klimatisierungssystem nach Anspruch 1, wobei der wenigstens eine IAQ-Sensor (105, 106) aus der Gruppe von IAQ-Sensoren ausgewählt ist, die CO₂-Sensor, Sensor für flüchtige organische Verbindungen ("VOC"), Sensor für Gesamtmenge an flüchtigen organischen Verbindungen ("TVOC"), Temperatursensor, Feuchtigkeitssensor, Ozonsensor, Saringassensor, Biowaffenwirkstoffsensor und Gassensor umfasst.

8. Klimatisierungssystem nach Anspruch 1, wobei das Klimatisierungssystem wenigstens den IAQ-Sensor (106), einen Außenlufttemperatursensor zum Messen einer Außenlufttemperatur und einen Innenraumlufttemperatursensor zum Messen einer Innenraumlufttemperatur umfasst und die IOB die Frischluftklappenstellung und den Zustand des Reinigers derart einstellt, dass der Reiniger mehr zur Verbesserung der IAQ als Luftverdünnung durch die Frischluftklappe benutzt wird, wenn ein solcher Betrieb den Energieverbrauch senken würde, indem die Menge an benötigter Energie für die Anpassung der Temperatur der Innenraumluft gesenkt wird, wenn die Außentemperatur wesentlich höher oder niedriger als die Innenraumtemperatur ist.

9. Klimatisierungssystem nach Anspruch 1, wobei das Klimatisierungssystem wenigstens einen IAQ-Sensor (106), einen Außenlufttemperatursensor zum Messen einer Außenlufttemperatur und einen Innenraumlufttemperatursensor zum Messen einer Innenraumlufttemperatur umfasst und die IOB die Frischluftklappenstellung und den Zustand des Reinigers derart einstellt, dass der Reiniger weniger zur Verbesserung der IAQ als Luftverdünnung durch die Frischluftklappe benutzt wird, wenn ein solcher Betrieb den Energieverbrauch senken würde, indem die Menge an benötigter Energie für die Anpassung der Temperatur der Innenraumluft gesenkt wird, wenn die Außentemperatur im Wesentlichen gleich der Innenraumtemperatur ist oder die Außentemperatur derart von der Innenraumtemperatur abweicht, dass das Einleiten von Außenluft bewirken würde, dass sich die Innenraumtemperatur hin zu einer gewünschten Innenraumtemperatur verändert.

10. Klimatisierungssystem nach Anspruch 1, wobei die IOB (100) elektrische Schaltungen, um einen elektrischen Wert von dem wenigstens einen IAQ-Sensor (105) zu empfangen und aufzubereiten, und mehrere Ausgangsschaltungen umfasst, um die Stellung des Frischluftklappenventils und den Zustand des Reinigers einzustellen, wenn eine Schaltung oder ein Computerprogramm, die/das die Stellung des Frischluftklappenventils und den Zustand des Reinigers bestimmt, an der Klimaanlagensteuertafel angeordnet ist.

11. Klimatisierungssystem nach Anspruch 10, wobei die IOB (100) eine elektrische Darstellung des wenigstens einen IAQ-Sensors (das Aufbereitungssignal) an die Klimaanlagensteuertafel (103) sendet, und ein Mikroprozessor an der Klimaanlagensteuertafel, der ein Programm mit einem IAQ-Algorithmus ausführt, eine berechnete Ventilstellung für die Frischluftklappe und einen Betriebszustand für den Reiniger bestimmt und die berechnete Ventilstellung und den Reinigerzustand an die IOB sendet, wobei die IOB die Frischluftklappenventilstellung und den Reinigerzustand einstellt.

12. Klimatisierungssystem nach Anspruch 11, ferner umfassend wenigstens einen Sensor für Außenluftqualität (OAQ), wobei dann, wenn ein OAQ-Pegel als über einem im Voraus definierten OAQ-Pegel liegend gemessen wird, das BMS eine Lüftereinheit (AHU) ausschaltet und die IOB (100) die Frischluftklappe (101) schließt.

13. Klimatisierungssystem nach Anspruch 1, wobei der UV-Reiniger (107) einen Passivfilter (666) oder einen Passivfilter (666) und einen Fotokatalysator (667) umfasst.

14. Klimatisierungssystem nach Anspruch 13, wobei eine Druckdifferenz zwischen dem Einlass und dem Auslass des Passivfilters (666) gemessen wird und wenn die Druckdifferenz einen Schwellenwert überschreitet, eine Filterwechselwarnung erzeugt wird.

## Revendications

1. Système de climatiseur servant à améliorer la qualité de l'air intérieur (« IAQ ») comprenant :
un climatiseur servant à recevoir de l'air intérieur à partir d'un espace intérieur (116), afin de chauffer ou de refroidir l'air, le climatiseur devant ensuite retourner l'air conditionné vers l'espace intérieur ;
un tableau de commande (103) de climatiseur, le tableau de commande de climatiseur étant monté dans le climatiseur ou sur celui-ci et le tableau de commande de climatiseur étant relié électriquement au climatiseur pour réguler les fonctions du climatiseur ;
un tableau d'option IAQ (« IOB ») (100) couplé électriquement au tableau de commande de climatiseur, l'IOB étant configuré pour accepter des entrées électriques à partir d'au moins un capteur d' IAQ ;
un registre à air frais (101) relié électriquement à l'IOB (100), le registre à air frais (101) présentant une position de soupape, la position de soupape déterminant le débit d'air frais (115) vers l'espace intérieur (116), l'IOB (100) régulant la position de la soupape ; et
un purificateur d'air (102), le purificateur d'air (102) étant situé de sorte que l'air provenant de l'espace intérieur (116) traverse le purificateur (102), le purificateur d'air (102) étant couplé électriquement à l'IOB (100) et étant commandé par celui-ci, dans lequel l'IOB (100) reçoit une entrée depuis l'au moins un capteur d'IAQ et où l'IOB commande respectivement la position de soupape du registre (101) à air frais, et le fonctionnement du purificateur d'air (102) étant fondé au moins en partie sur l'entrée provenant de l'au moins un capteur IAQ (106), afin d'améliorer l'IAQ de l'espace intérieur (116) ;
dans lequel le purificateur (102) est un purificateur à UV comportant une lampe de purification aux UV (107) avec un état de MARCHE et d'ARRÊT, le purificateur à UV (102) étant situé de sorte que l'air provenant de l'espace intérieur (116) passe par la lampe de purification aux UV et à côté de celle-ci (107).

2. Système de climatiseur selon la revendication 1, dans lequel le registre à air frais (101) est un registre proportionnel à air frais.

3. Système de climatiseur selon la revendication 1, dans lequel le registre à air frais est un registre à deux étages.

4. Système de climatiseur selon la revendication 1, dans lequel le registre à air frais est un registre à deux étages et où le registre à air de premier étage (301) procure un premier flux d'air d'air frais et où un deuxième registre à air frais (401) procure un deuxième flux d'air d'air frais.

5. Système de climatiseur selon la revendication 1, comprenant en outre un registre d'évacuation (501), le registre d'évacuation étant ouvert lorsque le registre à air frais (301) est ouvert par l'IOB (100).

6. Système de climatiseur selon la revendication 5, comprenant en outre un transformateur de détection de courant (« CT ») servant à mesurer une intensité électrique acheminée vers le purificateur à UV (102), dans lequel une sortie électrique du CT est couplée électriquement à l'IOB (100) et où l'IOB (100) détecte à distance une défaillance de la lampe de purification aux UV (107).

7. Système de climatiseur selon la revendication 1, dans lequel l'au moins un détecteur d'IAQ (105, 106) est choisi dans l'ensemble de détecteurs d'IAQ constitué d'un détecteur de CO₂, d'un détecteur de composé organique volatil (« COV »), d'un détecteur du total des composés organiques volatils (« TCOV »), d'un capteur de température, d'un capteur d'humidité, d'un détecteur d'ozone, d'un détecteur de gaz sarin, d'un détecteur d'agent d'arme biologique et d'un détecteur de gaz.

8. Système de climatiseur selon la revendication 1, dans lequel le système de climatiseur comprend au moins un détecteur d'IAQ (106), un capteur de température de l'air extérieur servant à mesurer une température de l'air extérieur et un capteur de température de l'air intérieur servant à mesurer une température de l'air intérieur, et où l'IOB règle la position du registre à air frais et l'état du purificateur, de sorte que le purificateur sert à améliorer l'IAQ plus que la dilution d'air par le registre à air frais lorsque cette opération doit réduire la consommation d'énergie en réduisant la quantité d'énergie nécessaire pour conditionner la température de l'air intérieur lorsque la température extérieure est sensiblement plus élevée ou plus basse que la température de la pièce intérieure.

9. Système de climatiseur selon la revendication 1, dans lequel le système de climatiseur comprend au moins un détecteur d'IAQ (106), un capteur de température de l'air extérieur servant à mesurer une température de l'air extérieur et un capteur de température de l'air intérieur servant à mesurer une température de l'air intérieur, et où l'IOB règle la position du registre à air frais et l'état du purificateur, de sorte que le purificateur sert moins à améliorer l'IAQ que la dilution par l'air par le registre à air frais lorsque cette opération doit réduire la consommation d'énergie en réduisant la quantité d'énergie nécessaire pour refroidir la température de l'air intérieur lorsque la température extérieure est sensiblement similaire à la température de la pièce intérieure, ou lorsque la température extérieure diffère de la température de la pièce intérieure, de sorte que l'introduction d'air extérieur doit amener la température intérieure à évoluer vers une température voulue d'air intérieur.

10. Système de climatiseur selon la revendication 1, dans lequel l'IOB (100) comprend un circuit électrique servant à recevoir et à refroidir une valeur électrique à partir de cet au moins un détecteur d'IAQ (105) et une pluralité de circuits de sortie servant à établir la position de la soupape de registre à air frais et l'état du purificateur, dans lequel un circuit ou un programme informatique qui détermine la position du registre à air frais et l'état du purificateur se trouve sur le tableau de commande du climatiseur.

11. Système de climatiseur selon la revendication 10, dans lequel l'IOB (100) envoie une représentation électrique de l'au moins un détecteur d'IAQ (le signal conditionné) au tableau de commande du climatiseur (103) et où un microprocesseur situé sur le tableau de commande du climatiseur exécute un programme comprenant un algorithme d'IAQ qui détermine une position calculée de soupape pour le registre à air frais et un état de fonctionnement pour le purificateur, et envoie la position calculée de soupape et l'état du purificateur à l'IOB, dans lequel l'IOB détermine la position de la soupape du registre à air frais et l'état du purificateur.

12. Système de climatiseur selon la revendication 11, comprenant en outre au moins un détecteur de qualité d'air extérieur (OAQ), dans lequel lorsqu'un niveau d'OAQ est détecté comme au-dessus d'un niveau prédéfini d'OAQ, le BMS arrête une unité de traitement d'air (AHU) et l'IOB (100) ferme le registre (101) à air frais.

13. Système de climatiseur selon la revendication 1, dans lequel le purificateur à UV (107) comprend un filtre passif (666) ou un filtre passif (666) et un photocatalyseur (667).

14. Système de climatiseur selon la revendication 13, dans lequel une différence de pression entre l'entrée et la sortie du filtre passif (666) est mesurée et où lorsque la différence de pression dépasse une valeur seuil, un avertissement de changement de filtre est produit.
